# EUROPÄISCHE PATENTSCHRIFT

(11) **EP 2 805 185 B1**
(45) Veröffentlichungstag und Bekanntmachung des Hinweises auf die Patenterteilung: **03.10.2018**
(21) Anmeldenummer: 13701229.0
(22) Anmeldetag: 14.01.2013
(51) Int. Cl.: G01S 19/14, H04W 4/02, H04L 29/12, H04L 29/08, G01S 5/00

(54) **VERFAHREN ZUM BETRIEB EINES FELDGERÄTS, FELDGERÄT UND SERVER FÜR EIN WEITFLÄCHIGES AUTOMATISIERUNGSNETZ**
METHOD FOR OPERATING A FIELD DEVICE, FIELD DEVICE AND SERVER FOR A WIDE-AREA AUTOMATION NETWORK
PROCÉDÉ POUR FAIRE FONCTIONNER UN APPAREIL DE TERRAIN, APPAREIL DE TERRAIN, ET SERVEUR POUR UN RÉSEAU D'AUTOMATISATION DE GRANDE SURFACE

(30) Priorität: 17.01.2012 DE 102012100355
(43) Veröffentlichungstag der Anmeldung: 26.11.2014
(73) Patentinhaber: Phoenix Contact GmbH & Co. KG, 32825 Blomberg (DE)
(72) Erfinder: POLLMANN, Werner, 37671 Höxter (DE)
(74) Vertreter: Michalski Hüttermann & Partner Patentanwälte mbB
(86) Internationale Anmeldenummer: PCT/EP2013/050545
(87) Internationale Veröffentlichungsnummer: WO 2013/107704

(56) Entgegenhaltungen:
- US-A1- 2007 016 312
- US-A1- 2009 063 680
- US-A1- 2010 164 749
- US-A1- 2011 015 799
- US-A1- 2011 202 185

## Beschreibung

Die vorliegende Erfindung betrifft ein Verfahren zum Betrieb eines Feldgeräts zur Durchführung von Mess- und/oder Automatisierungsaufgaben in einem weitflächigen Automatisierungsnetz. Weiterhin umfasst die vorliegende Erfindung ein solches Feldgerät zur Durchführung von Mess- und/oder Automatisierungsaufgaben in einem weitflächigen Automatisierungsnetz. Außerdem umfasst die vorliegende Erfindung einen Server für ein weitflächiges Automatisierungsnetz zum Betrieb wenigstens eines Feldgeräts zur Durchführung von Mess- und/oder Automatisierungsaufgaben.

Im Rahmen einer zunehmenden Zentralisierung und Vernetzung verschiedener Funktionen werden zunehmend Automatisierungsnetze gebildet, die weitflächig verteilt sind, sodass einzelne Feldgeräte des Automatisierungsnetzes teilweise 100 Meter oder mehr auseinander liegen. Der Betrieb eines solchen weitflächigen Automatisierungsnetzes ist dadurch erschwert, das einzelne Komponenten, beispielsweise die Feldgeräte, weit verteilt sind, und ein Zugriff vor Ort daher mit großen Aufwand und Kosten verbunden ist. Außerdem sind solche Automatisierungsnetze teilweise durch Zusammenschlüsse bestehender, teilweise lokaler Netze gebildet worden, die mitunter auch in einer solchen Struktur weiter betrieben werden sollen, wodurch sich weitere Anforderungen an die Kommunikation innerhalb des Automatisierungsnetzes ergeben. Auch wenn einzelne Feldgeräte teilweise ähnliche Aufgaben übernehmen, ist es oft erforderlich, diese speziell zu konfigurieren, so dass sie ihre Funktion erfüllen können. Auch die Inbetriebnahme in dem Automatisierungsnetz erfordert jeweils eine individuelle Konfiguration. Solche Automatisierungsnetze werden beispielsweise im Zusammenhang mit Versorgungsnetzen, beispielsweise zur Verteilung von Strom, Gas, Wasser oder ähnlichem, verwendet.

Im Weiteren wird beispielhaft auf ein Versorgungsnetz für Strom Bezug genommen, das ein solches Automatisierungsnetz umfasst. Durch die zunehmende Verbreitung von dezentral erzeugten Energien, insbesondere von erneuerbaren Energien, in elektrischen Versorgungsnetzen ergeben sich für die Betreiber von solchen Versorgungsnetzen zusätzliche Anforderungen, um das Versorgungsnetz effizient zu betreiben. Solche zusätzlichen Anforderungen ergeben sich beispielsweise für eine zu einem Ortsnetz gehörende Ortsnetzstation innerhalb eines Energieverteilungsnetzes. Der Energiefluss lief in der Vergangenheit üblicherweise von den Kraftwerken über eine Mittelspannungsebene und wenigstens eine Ortsnetzstation zu den Ortsnetzen, ohne dass Rückströme beispielsweise in die Mittelspannungsebene aufgetreten sind. Durch die zunehmende Verbreitung von dezentralen Energieeinspeisungen, beispielsweise durch Blockkraftwerke, Photovoltaik-Anlagen, Windkraftanlagen oder ähnliches, ist es jedoch auch möglich, dass Energie von den Ortsnetzen in das Mittelspannungsnetz fließt und damit Rückwirkungen auf den Betrieb des Versorgungsnetzes hat. Um diese Rückwirkungen erfassen und/oder beeinflussen zu können, ist es erforderlich, Energieströme in dem Ortsnetz dezentral zu erfassen und/oder zu steuern.

Um den Betrieb und die Inbetriebnahme von dezentralen Feldgeräten zur Durchführung von Mess- und/oder Automatisierungsaufgaben, beispielsweise die Erfassung und/oder Beeinflussung von Energieströmen, kostengünstig durchführen zu können, sollen diese Arbeiten von Servicepersonal einfach durchzuführen sein, ohne dass besonders qualifiziertes Fachpersonal erforderlich ist. Das Servicepersonal hat Kenntnisse für den Einbau von Feldgeräten, aber üblicherweise keine oder nur geringe Kenntnisse im Umgang mit Automatisierungskomponenten. Daher wird teilweise versucht, die Feldgeräte vor der Installation zu konfigurieren, was jedoch fehleranfällig ist. Außerdem ist die Integration der Feldgeräte in die Anlagen der Betreiber der Automatisierungsnetze schwierig, da diese häufig eigene, besonders ausgewählte Bezeichner für einzelne Feldgeräte bzw. diesen zugeordnete dezentrale Stationen verwenden, um intern auf gewohnte Weise arbeiten zu können. Es sind daher für Betrieb und Inbetriebnahme auch besondere Kenntnisse über das Automatisierungsnetz erforderlich, die das Servicepersonal üblicherweise nicht besitzt. Im Fall des Versorgungsnetzes können alternativ oder zusätzlich Kenntnisse über das Versorgungsnetz selber erforderlich sein.

Um die Wartung von Feldgeräten in Versorgungsnetzen zu erleichtern ist aus der DE 101 63 564 A1 ein Feldgerät mit einem GPS-Modul bekannt, das seine Position an ein Warte oder ein Leitsystem weitergeben kann. Aufgrund dieser Position ist das Feldgerät für einen Servicetechniker leicht aufzufinden.

In diesem Zusammenhang sind aus der US 2009/063680 A1 Systeme und Verfahren für ein Stromaggregationssystem bekannt. In einer Implementierung umfasst ein Verfahren, das Laden einer Elektroressource über einen Stromanschluss aus einem elektrischen Netz, das Empfangen einer eindeutigen Gerätekennung über den Stromanschluss, und das Bestimmen eines elektrischen Netzwerkstandorts der Elektroressource aus der eindeutigen Kennung.

Außerdem ist aus der US 2007/016312 A1 ein Verfahren zum Zuweisen von Kennungen für Module in einer unterbrechungsfreien Stromversorgung (USV) bekannt. Die Kennungen können durch eine sequentielle Übertragung eines Signals zwischen den USV-Modulen zur Verfügung gestellt werden.

Ausgehend von dem oben genannten Stand der Technik liegt der Erfindung somit die Aufgabe zugrunde, ein Verfahren, ein Feldgerät und einen Server der oben genannten Art anzugeben, die einen einfachen Betrieb und eine einfache Inbetriebnahme eines Feldgeräts in einem Automatisierungsnetz ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum Betrieb eines Feldgeräts zur Durchführung von Mess- und/oder Automatisierungsaufgaben in einem weitflächigen Automatisierungsnetz angegeben. Das Verfahren umfasst die Schritte Erfassen der Position des Feldgeräts in dem Feldgerät, Erzeugen eines das Feldgerät identifizierenden Datensatzes mit der Position und einer eindeutigen Kennung des Feldgeräts, Übertragen des Datensatzes von dem Feldgerät an einen Server des Automatisierungsnetzes, Zuordnen eines Bezeichners zu dem durch den Datensatz identifizierten Feldgerät, Übertragen des Bezeichners von dem Server an das Feldgerät, Kommunizieren in dem Automatisierungsnetz unter Verwendung des Bezeichners, Vergleichen der Position des durch den Datensatz identifizierten Feldgeräts mit Positionen von in dem Automatisierungsnetz bekannten Feldgeräten, und Übertragen des Bezeichners eines bekannten Feldgeräts mit der gleichen Position auf das durch den Datensatz identifizierte Feldgerät.

Weiterhin ist erfindungsgemäß ein Server für ein weitflächiges Automatisierungsnetz zum Betrieb wenigstens eines Feldgeräts zur Durchführung von Mess- und/oder Automatisierungsaufgaben angegeben. Der Server umfasst eine Serverkommunikationseinheit, wobei der Server eine Zuordnungseinheit umfasst, die ausgeführt ist, einem durch einen Datensatz mit der Position und einer eindeutigen Kennung identifizierten Feldgerät einen Bezeichner zuzuordnen, die Serverkommunikationseinheit ausgeführt ist, den Datensatz von dem Feldgerät zu empfangen und den Bezeichner an das Feldgerät zu übertragen, der Server ausgeführt ist, mit dem Feldgerät unter Verwendung des Bezeichners zu kommunizieren, und der Server ausgeführt ist, die Position des durch den Datensatz identifizierten Feldgeräts mit Positionen von in dem Automatisierungsnetz bekannten Feldgeräten zu vergleichen, und den Bezeichner eines bekannten Feldgeräts mit der gleichen Position auf das durch den Datensatz identifizierte Feldgerät zu übertragen.

Außerdem ist erfindungsgemäß ein System mit einem Feldgerät zur Durchführung von Mess- und/oder Automatisierungsaufgaben in einem weitflächigen Automatisierungsnetz und einem obigen Server angegeben. Das Feldgerät umfasst eine Positionserfassungseinheit, die ausgeführt ist, die Position des Feldgeräts zu erfassen, eine Verarbeitungseinheit zum Erzeugen eines das Feldgerät identifizierenden Datensatzes mit der erfassten Position und einer eindeutigen Kennung des Feldgeräts, und eine Kommunikationseinheit, wobei die Kommunikationseinheit ausgeführt ist, den Datensatz unter Berücksichtigung der Position des Feldgeräts an einen Server des Automatisierungsnetzes zu übertragen und einen Bezeichner von dem Server zu empfangen, und das Feldgerät ausgeführt ist, mit dem Automatisierungsnetz unter Verwendung des Bezeichners zu kommunizieren.

Grundidee der vorliegenden Erfindung ist es also, durch eine eindeutige Zuordnung der Position und einer eindeutigen Kennung des Feldgeräts die Kommunikation mit dem Feldgerät in dem Automatisierungsnetz dahingehend zu erleichtern, dass das Feldgerät mit dem von dem Server zugeordneten Bezeichner zur Kommunikation verwendet werden kann. Diese Zuordnung kann jederzeit erfolgen, so dass es nicht erforderlich ist, eine fehleranfällige Vorabzuordnung durchzuführen. Die Inbetriebnahme wird erleichtert, da die Zuordnung automatisch erfolgt. Durch die in weitflächigen Automatisierungsnetzen gegebenen Abstände zwischen einzelnen dezentralen Stationen, beispielsweise dezentralen Energieeinspeisungen, ist die eindeutige Zuordnung des Bezeichners mit einer hinreichenden Genauigkeit möglich, auch wenn die Position nur mit einer Fehlertoleranz, die üblicherweise im Bereich von weniger als 100 m, vorzugsweise im Bereich von max. 10 m liegt, ermittelt werden kann. Die Abstände zwischen einzelnen dezentralen Stationen können typischerweise etwa 100 Meter oder mehr, mitunter auch etwa 10 Meter oder mehr betragen. Das Erfassen der Position des Feldgeräts erfolgt als absolute, geographische Position. Es erfolgt in der Positionserfassungseinheit und kann auf beliebige Weise durchgeführt werden. Prinzipiell kann die Position des Feldgeräts manuell in einem beliebigen Format in das Feldgerät eingegeben und der Positionserfassungseinheit bereitgestellt werden. Vorteilhafterweise ist das Feldgerät ausgeführt, beim ersten Start automatisch die Übertragung des Datensatzes zu initiieren, so dass alle weitere Kommunikation mit dem Bezeichner erfolgen kann. In einer alternativen Ausgestaltung ist das Feldgerät ausgeführt, den Datensatz durch eine Bedienung zu übertragen, beispielsweise durch einen Initialisierungsknopf. Die eindeutige Kennung des Feldgeräts umfasst vorzugsweise eine Seriennummer des Feldgeräts oder einer Komponente des Feldgeräts, eine fest zugeordnete Netzwerkadresse, beispielsweise eine Mac-Adresse, eine Telefonnummer oder ähnliches. Die eindeutige Kennung kann auch eine dem Feldgerät speziell für die Identifikation zugeordnete eindeutige Kennung sein, die beispielsweise vom Hersteller des Feldgeräts zugeordnet wird. Die Kommunikationseinheit und die Serverkommunikationseinheit können jeweils unabhängig ausgeführt sein. Sie können eine Kommunikation über ein leitungsgebundenes oder leitungsloses Netzwerk durchzuführen, z.B. GSM, GPRS, WLAN, Ethernet, Powerline oder andere, die zur Kommunikation in dem Automatisierungsnetz verwendet werden, ohne dass sie integraler Bestandteil des Automatisierungsnetzes sind. Beispielsweise können die Kommunikationseinheit bzw. die Serverkommunikationseinheit als Netzwerkadapter zum Anschluss an das Netzwerk ausgeführt sein. Insbesondere kann die Verbindung zwischen dem Feldgerät und dem Server über eine Internetverbindung hergestellt werden. Das Automatisierungsnetz ermöglicht eine Kommunikation des Feldgeräts beispielsweise mit einer Leitstelle, wobei das Netzwerk wenigstens ein öffentliches Kommunikationsnetz umfassen kann. Vorzugsweise ist das Netzwerk Teil des Automatisierungsnetzes, um die Kommunikation mit dem Feldgerät zu ermöglichen. Vorzugsweise ist das Feldgerät ausgeführt, die Kennung zu speichern. Dadurch kann das Feldgerät bei einem Neustart unmittelbar unter Verwendung dieser Kennung kommunizieren. Der Bezeichner kann eine beliebige Zeichenkombination sein, beispielsweise ein alphanumerischer Name. Unter Datensatz ist hier die Kombination der Position und der eindeutigen Kennung zu verstehen. Dies ist unabhängig von der Art und Weise, wie die Position und die eindeutige Kennung von dem Feldgerät an den Server übertragen werden. Beispielsweise können die Position und die eindeutige Kennung in unterschiedlichen Datenpaketen und sogar über unterschiedliche Übertragungswege von dem Feldgerät zu dem Server übertragen werden. Das Feldgerät ist ein ansonsten übliches Feldgerät zur Durchführung von Mess- und/oder Automatisierungsaufgaben, beispielsweise zur Messung von dezentral erzeugter und eingespeister Energie, wobei in einer weiteren Ausführungsform die Einspeisung von dem Feldgerät alternativ oder zusätzlich gesteuert wird. Vorzugsweise stellt der Server den Bezeichner wenigstens einer weiteren Komponente des Automatisierungsnetzes, z.B. einer Leitstelle, zur Verfügung, so dass eine Kommunikation zwischen dem Feldgerät und dieser weiteren Komponente unter Verwendung des Bezeichners erfolgen kann.

Durch den Vergleich der Position von Feldgeräten kann ein Austausch eines Feldgeräts durch ein anderes festgestellt werden. Bei der Zuweisung des Bezeichners kann der Austausch des Feldgeräts transparent erfolgen, ohne dass Änderungen in der Kommunikation zum Betrieb des Feldgeräts erforderlich sind. Durch einen Vergleich der eindeutigen Kennzeichnung kann zusätzlich überprüft werden, ob es sich um das an der Position befindliche Feldgerät handelt, dass erneut einen Datensatz an den Server sendet. Der Server kann die Positionen von ihm bekannten Feldgeräten zum Vergleich heranziehen. Wenn in dem Automatisierungsnetz eine Mehrzahl Server eingesetzt ist, kann der Server zusätzlich anderen Servern bekannte Feldgeräte zum Vergleich heranziehen. Der Vergleich der Position wird vorzugsweise unter Berücksichtigung einer Toleranz für die Position des Feldgeräts durchgeführt, die im Bereich der Toleranz für die Erfassung der Position des Feldgeräts liegt.

Gemäß einer bevorzugten Ausführungsform der Erfindung ist vorgesehen, dass der Schritt des Erfassens der Position des Feldgeräts das Auswerten von Positionsdaten, insbesondere von Satellitenpositionsdaten umfasst. Die Positionsdaten können beliebige Daten sein, die geeignet sind, daraus eine absolute, geographische Position zu bestimmen. Zur Positionsbestimmung hat sich die Verwendung von Satellitenpositionsdaten, beispielsweise nach dem GPS-System, bewährt.

Gemäß einer bevorzugten Ausführungsform der Erfindung umfasst der Schritt des Erfassens der Position des Feldgeräts das Verbinden des Feldgeräts mit einem Empfänger für Positionsdaten, insbesondere für Satellitenpositionsdaten, das Empfangen von Positionsdaten in dem Empfänger, und das Übertragen der empfangenen Positionsdaten von dem Empfänger an das Feldgerät. Weiterhin ist entsprechend vorgesehen, dass das Feldgerät eine Schnittstelle für die Verbindung mit einem Empfänger für Positionsdaten, insbesondere für Satellitenpositionsdaten umfasst, wobei die Positionserfassungseinheit ausgeführt ist, Positionsdaten von dem Empfänger für Positionsdaten über die Schnittstelle zu empfangen. Für fest installierte Feldgeräte ist oft eine einmalige Erfassung der Position für den Betrieb ausreichend. Entsprechend kann auf die Ausführung von Feldgeräten mit aufwendigen Empfangsgeräten für Positionsdaten sowie einer aufwendigen Positionserfassung verzichtet werden. Somit kann das Feldgerät kostengünstig und einfach hergestellt werden.

Gemäß einer bevorzugten Ausführungsform der Erfindung ist vorgesehen, dass das Feldgerät einen Empfänger für Positionsdaten, insbesondere für Satellitenpositionsdaten umfasst. Das entsprechende Feldgerät zeichnet sich durch eine einfache Installation aus, da für den Betrieb und insbesondere für die Inbetriebnahme lediglich das Feldgerät selber ab das Automatisierungsnetz angeschlossen werden muss.

In beiden vorgenannten Fällen kann der Empfänger für Positionsdaten als einfacher Empfänger ausgeführt sein, der die empfangenen Positionsdaten unmittelbar an die Positionserfassungseinheit überträgt, oder der Empfänger umfasst eine Verarbeitungseinheit, welche die Positionsdaten verarbeitet, und ein Verarbeitungsergebnis an die Positionserfassungseinheit überträgt. Die Verarbeitung der Positionsdaten kann die Bestimmung der Position des Feldgeräts umfassen.

Gemäß einer weiteren Ausführungsform der Erfindung ist vorgesehen, dass das Verfahren den zusätzlichen Schritt des Übertragens von Konfigurationsdaten von dem Server an das Feldgerät in Abhängigkeit von der Position des Feldgeräts umfasst. Weiterhin ist entsprechend vorgesehen, dass der Server ausgeführt ist, Konfigurationsdaten an das Feldgerät unter Berücksichtigung der Position zu übertragen. Auch ist entsprechend vorgesehen, dass das Feldgerät ausgeführt ist, Konfigurationsdaten von dem Server zu empfangen. Die Konfigurationsdaten können sowohl den Betrieb der Funktion des Feldgeräts, also seine Messfunktion und/oder seine Steuerungsfunktion, wie auch die Kommunikation über die Kommunikationseinheit betreffen. Auch beliebige andere Komponenten des Feldgeräts können entsprechend konfiguriert werden. Durch die Konfiguration unter Berücksichtigung der Position des Feldgeräts kann dieses effizient in dem Automatisierungsnetz verwendet werden.

In weiterer vorteilhafter Ausgestaltung der Erfindung ist vorgesehen, dass der Server Landkarteninformationen an das Feldgerät überträgt. Die Landkarteninformation wird bevorzugt unter Berücksichtigung der Position des Feldgeräts übertragen.

Gemäß einer bevorzugten Ausführungsform der Erfindung ist vorgesehen, dass der Schritt des Zuordnens eines Bezeichners zu dem durch den Datensatz identifizierten Feldgerät das Erzeugen eines logischen Namens unter Berücksichtigung der Position des Feldgeräts umfasst. Entsprechend ist die Zuordnungseinheit ausgeführt, dem durch einen Datensatz mit der Position und einer eindeutigen Kennung identifizierten Feldgerät einen logischen Namen unter Berücksichtigung der Position des Feldgeräts zuzuordnen. Die Zuordnung eines logischen Namens ermöglicht eine einfache Integration des Feldgeräts in das Automatisierungsnetz. Auch eine entsprechende Integration in das Versorgungsnetz wird erleichtert. Wartungsarbeiten an dem Feldgerät werden dadurch erleichtert, dass das Wartungspersonal anhand des Bezeichners beispielsweise auf dessen Position rückschließen kann.

In weiterer vorteilhafter Ausgestaltung der Erfindung ist vorgesehen, dass die Kommunikationseinheit ausgeführt ist, den Datensatz an einen Server des Automatisierungsnetzes unter Berücksichtigung der Position des Feldgeräts zu übertragen. So kann beispielsweise bei der Verwendung von mehreren Servern in dem Automatisierungsnetz basierend auf der Position des Feldgeräts der geographisch nächstgelegene und/oder zuständige Server von dem Feldgerät ausgewählt werden, um eine Kommunikation mit diesem zu initiieren.

Gemäß einer weiteren Ausführungsform der Erfindung ist vorgesehen, dass das Feldgerät ausgeführt ist, unter Berücksichtigung seiner Position eine positionsbezogene Konfiguration der Kommunikationseinheit zur Kommunikation mit dem Server, insbesondere zum Übertragen des Datensatzes und Empfangen des Bezeichners, durchzuführen. Die positionsbezogene Konfiguration der Kommunikationseinheit umfasst beispielsweise eine länderspezifische Konfiguration, insbesondere zum Aufbau einer Telekommunikationsverbindung bei entsprechend ausgeführter Kommunikationseinheit. Beispielsweise können zu verwendende Übertragungsprotokolle, Einwahlknoten, dafür erforderliche Präfixe oder ähnliches abhängig von der Position des Feldgeräts in diesem vorkonfiguriert werden. Vorzugsweise erfolgt nach der positionsbezogenen Konfiguration durch das Feldgerät eine Konfiguration durch den Server.

Nachfolgend wird die Erfindung unter Bezugnahme auf die anliegende Zeichnung anhand bevorzugter Ausführungsformen näher erläutert.

Es zeigen:
- Fig. 1: eine schematische Ansicht eines Feldgeräts gemäß einer Ausführungsform der vorliegenden Erfindung,
- Fig. 2: eine schematische Ansicht eines Servers einer Ausführungsform der vorliegenden Erfindung zur Kommunikation mit dem Feldgerät aus Fig. 1,

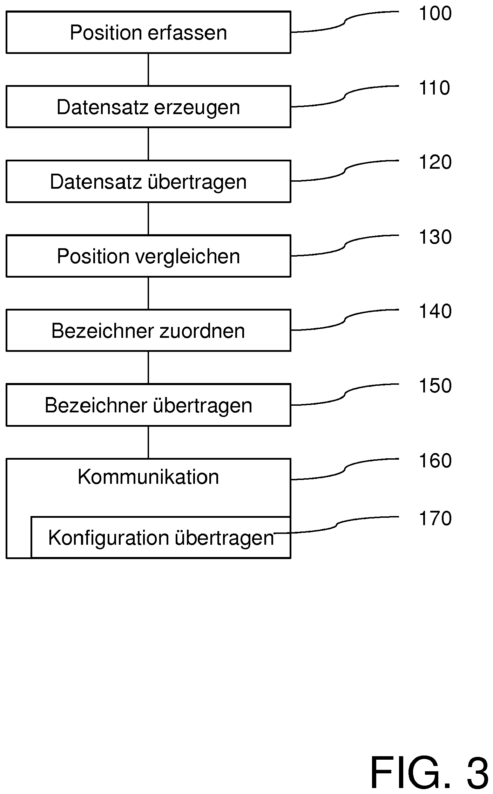

- Fig. 3: das Verfahren zum Betrieb des Feldgeräts aus Fig. 1 in einem Automatisierungsnetz mit einem Server aus Fig. 2 gemäß einer Ausführungsform der vorliegenden Erfindung, und

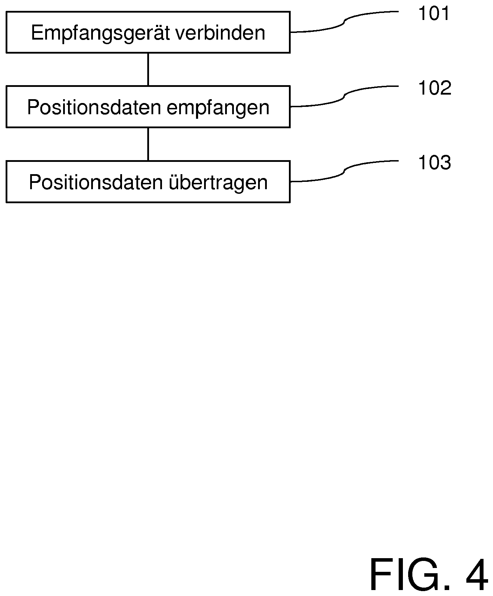

- Fig. 4: ein Verfahren zur Bestimmung der Position des Feldgeräts gemäß einer alternativen Ausführungsform der vorliegenden Erfindung.

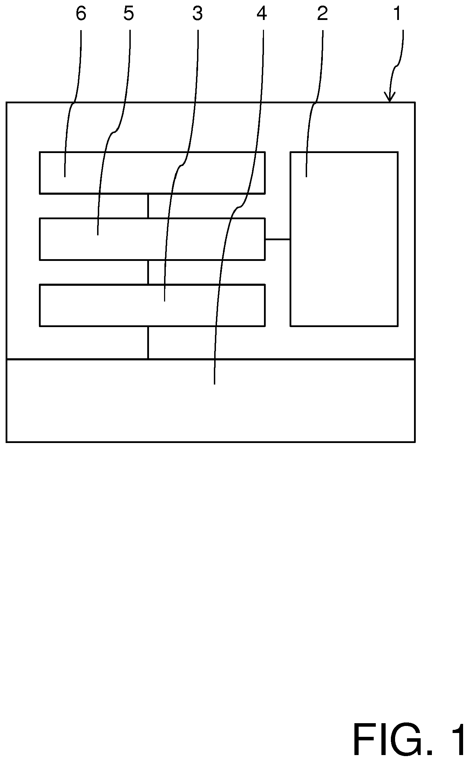

Fig. 1 zeigt ein erfindungsgemäßes Feldgerät 1 gemäß einer ersten Ausführungsform der Erfindung. Das Feldgerät 1 ist zur Durchführung von Mess- und/oder Automatisierungsaufgaben in einem weitflächigen Automatisierungsnetz ausgeführt. Das Automatisierungsnetz ist hier beispielhaft zur Kommunikation nach dem Ethernet-Standard ausgeführt und Teil eines Versorgungsnetzes zur Verteilung von elektrischer Energie, in dem die Feldgeräte 1 teilweise 100 Meter oder mehr auseinander liegen. Das Feldgerät 1 umfasst in diesem Ausführungsbeispiel eine Messeinheit 2 zur Messung eines von einer dezentralen Energieerzeugungseinheit, beispielsweise einer Photovoltaik-Anlage oder einem Windrad, erzeugten und in das Versorgungsnetz eingespeisten Stroms. Das Automatisierungsnetz, die Energieerzeugungseinheit und das Versorgungsnetz sind in den Figuren nicht gezeigt.

Das Feldgerät 1 umfasst weiterhin eine Positionserfassungseinheit 3 und einen Empfänger 4 für Positionsdaten. Der Empfänger 4 ist in diesem Ausführungsbeispiel als GPS-Empfänger zum Empfang von Satellitenpositionsdaten ausgeführt. Die Positionserfassungseinheit 3 ist ausgeführt, von dem Empfänger 4 für Positionsdaten bereitgestellte Satellitenpositionsdaten auszuwerten und die Position des Feldgeräts 1 daraus zu erfassen.

In einer zweiten Ausführungsform der Erfindung ist der Empfänger 4 für Positionsdaten von dem Feldgerät 1 getrennt ausführt. Entsprechend umfasst das Feldgerät 1 eine Schnittstelle für die Verbindung mit dem Empfänger 4 für Positionsdaten, und die Positionserfassungseinheit 3 ist ausgeführt, die Positionsdaten von dem Empfänger 4 für Positionsdaten über die Schnittstelle zu empfangen.

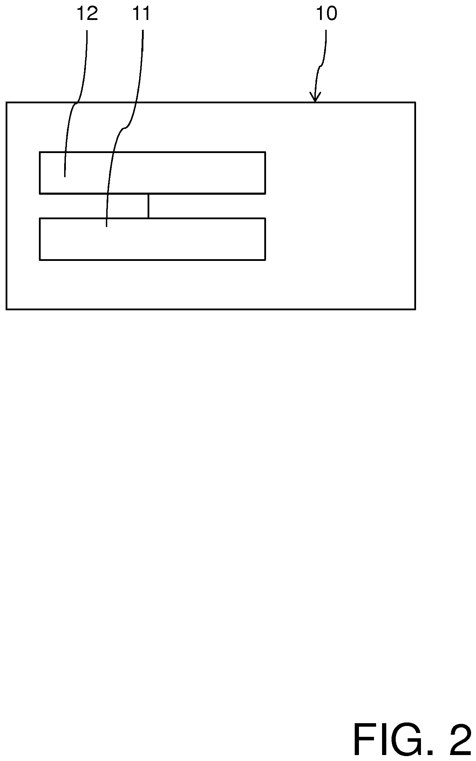

Das Feldgerät 1 umfasst weiterhin eine Verarbeitungseinheit 5 und eine Kommunikationseinheit 6. Die Kommunikationseinheit 6 ist in diesem Ausführungsbeispiel als Netzwerkadapter nach dem Ethernet-Standard für die Verbindung mit dem Automatisierungsnetz ausgeführt und weist entsprechend eine MAC-Adresse auf, die eine eindeutige Kennung darstellt. In einer alternativen Ausführungsform ist die Kommunikationseinheit als DSL- oder GSM-/GPRS-Modem zur Verbindung mit einem entsprechenden Netzwerk ausgeführt, wobei die Kommunikationseinheit 6 entsprechende eindeutige Kennungen aufweist, beispielsweise eine Telefonnummer für den Aufbau der GSM-/GPRS-Verbindung über das GSM-/GPRS-Modem. In dem Feldgerät 1 ist außerdem eine Seriennummer gespeichert, welche als eindeutige Kennung das Feldgerät 1 identifiziert und von der Verarbeitungseinheit 5 auslesbar ist. Die Verarbeitungseinheit 5 ist zum Erzeugen eines das Feldgerät 1 identifizierenden Datensatzes ausgeführt. Die Verarbeitungseinheit 5 ist ausgeführt, den Datensatz mit der von der Positionserfassungseinheit 3 erfassten Position, der Seriennummer des Feldgeräts 1 sowie der MAC-Adresse der Kommunikationseinheit 6 zu erzeugen. Die Kommunikationseinheit 6 ist weiterhin ausgeführt, den Datensatz an einen Server 10 des Automatisierungsnetzes, der im Detail in Fig. 2 gezeigt ist, zu übertragen und Nachrichten von dem Server 10 zu empfangen.

Der Server 10 ist als Server 10 für das Automatisierungsnetz zum Betrieb wenigstens eines Feldgeräts 1 zur Durchführung von Mess- und/oder Automatisierungsaufgaben ausgeführt. Das Automatisierungsnetz gemäß einer alternativen Ausführungsform umfasst eine Mehrzahl Server 10, die jeweils gleichartig aufgebaut sind. Der Server 10 umfasst eine Serverkommunikationseinheit 11, die ausgeführt ist, den das Feldgerät 1 identifizierenden Datensatz von diesem zu empfangen. Der Server 10 umfasst weiter eine Zuordnungseinheit 12, die ausgeführt ist, dem durch den Datensatz identifizierten Feldgerät 1 einen Bezeichner zuzuordnen. Der Bezeichner ist in diesem Ausführungsbeispiel eine alphanumerische Zeichenkette. Die Serverkommunikationseinheit 11 ist weiterhin ausgeführt, den Bezeichner an das Feldgerät 1 zu übertragen.

Der Server 10 ist zusätzlich ausgeführt, die Position des durch den Datensatz identifizierten Feldgeräts 1 mit Positionen von in dem Automatisierungsnetz bekannten Feldgeräten 1 zu vergleichen. Wenn der Vergleich ergibt, dass das durch den Datensatz identifizierte Feldgerät 1 an der Position eines bereits bekannten Feldgeräts 1 positioniert ist, wird dies als Austausch des entsprechenden Feldgeräts 1 erkannt und der Bezeichner des bekannten Feldgeräts 1 auf das an der gleichen Stelle positionierte und durch den Datensatz identifizierte Feldgerät 1 übertragen.

Feldgerät 1 und Server 10 sind ausgeführt, unter Verwendung des dem Feldgerät 1 zugeordneten Bezeichners miteinander zu kommunizieren.

Der Server 10 ist außerdem ausgeführt, Konfigurationsdaten an das Feldgerät 1 unter der Berücksichtigung seiner Position zu übertragen. Das Feldgerät 1 ist entsprechend ausgeführt, diese Konfigurationsdaten von dem Server 10 zu empfangen. Das Feldgerät 1 führt auf Grundlage dieser Konfigurationsdaten eine Konfiguration durch, so dass es automatisch in das Automatisierungsnetz und das Versorgungsnetz integriert wird.

Im Weiteren wird das Verfahren zum Betrieb des Feldgeräts 1 zur Durchführung von Mess- und/oder Automatisierungsaufgaben in dem Automatisierungsnetz erläutert.

In einem ersten Schritt 100 wird die Position des Feldgeräts 1 in dem Feldgerät 1 erfasst. Dazu werden von dem Empfänger 4 für Positionsdaten die Satellitenpositionsdaten an die Positionserfassungseinheit 3 übertragen, welche daraus die Position des Feldgeräts 1 erfasst.

In einer alternativen Ausführungsform wird die Position in dem Empfänger 4 für Positionsdaten erfasst und die Position wird an die Positionserfassungseinheit 3 übertragen.

In einem Schritt 110 wird in der Verarbeitungseinheit 5 der das Feldgerät 1 identifizierende Datensatz mit der Position des Feldgeräts 1 sowie der MAC-Adresse der Kommunikationseinheit 6 und der Seriennummer des Feldgeräts 1 in der Verarbeitungseinheit 5 erzeugt.

In Schritt 120 wird der Datensatz von der Verarbeitungseinheit 5 an die Kommunikationseinheit 6 übermittelt, welche diesen über das Automatisierungsnetz an den Server 10 überträgt. Dabei ist die Kommunikationseinheit 6 ausgeführt, den Datensatz unter Berücksichtigung der Position des Feldgeräts 1 zu übertragen. Entsprechend wird ein Server 10 des Automatisierungsnetzes ausgewählt, der sich in geographischer Nähe zu dem Feldgerät 1 befindet und für die Position des Feldgeräts 1 zuständig ist. Weiterhin ist das Feldgerät 1 ausgeführt, vor der Übertragung des Datensatzes eine Konfiguration der Kommunikationseinheit 6 beruhend auf der Position des Feldgeräts 1 durchzuführen. Die Konfiguration der Kommunikationseinheit 6 dient dazu, die Kommunikation mit dem Server 10 zu ermöglichen, indem beispielsweise länderspezifische Einstellungen vorgenommen werden. Wenn die Kommunikationseinheit 6 ein GSM-/GPRS-Modem ist, werden entsprechende Präfixes und eine Einwahlnummer für die Verbindung mit dem Automatisierungsnetz ausgewählt.

In Schritt 140 wird in der Zuordnungseinheit 12 des Servers 10 basierend auf dem von der Serverkommunikationseinheit 11 empfangenen Datensatz dem durch diesen Datensatz identifizierten Feldgerät 1 der alphanumerische Bezeichner zugeordnet. Dazu wird die Position des Feldgeräts 1 mit Positionen von in dem Automatisierungsnetz bekannten Feldgeräten 1 verglichen. Sofern in dem Automatisierungsnetz bereits ein Feldgerät 1 an der Position bekannt ist, wird der Bezeichner des bekannten Feldgeräts 1 dem durch den Datensatz identifizierten Feldgerät 1 zugeordnet. Entsprechend wird das Feldgerät 1 mit der gleichen Position als Austausch des bisherigen Feldgeräts 1 erkannt und behandelt. Das Zuordnen des Bezeichners zu dem durch den Datensatz identifizierten Feldgerät 1 umfasst das Erzeugen eines logischen Namens unter Berücksichtigung der Position und/oder der Funktion des Feldgeräts 1.

In Schritt 150 wird der Bezeichner von dem Server 10 an das Feldgerät 1 übertragen. Dazu wird der Bezeichner von der Zuordnungseinheit 12 an die Serverkommunikationseinheit 11 übermittelt, welche die Übertragung über das Automatisierungsnetz an die Kommunikationseinheit 6 des Feldgeräts 1 durchführt. Von der Kommunikationseinheit 6 des Feldgeräts 1 wird der Bezeichner an die Verarbeitungseinheit 5 übermittelt und darin gespeichert.

In Schritt 160 findet eine Kommunikation in dem Automatisierungsnetz unter Verwendung des Bezeichners statt. Das Feldgerät 1 kann dabei mit beliebigen Einheiten in dem Automatisierungsnetz, denen der Bezeichner von dem Server 10 zur Verfügung gestellt wird, kommunizieren. Somit kann der Server 10 ausschließlich für die Zuordnung des Bezeichners und dessen Übertragung an das Feldgerät 1 ausgeführt sein, während die übrige Funktion des Automatisierungsnetzes auf wenigstens einem weiteren Zentralrechner, beispielsweise einer Leitstelle, durchgeführt wird.

In Schritt 170 werden als Teil der Kommunikation in dem Automatisierungsnetz Konfigurationsdaten von dem Server 10 an das Feldgerät 1 in Abhängigkeit von der Position des Feldgeräts 1 übertragen, um dieses, wie zuvor beschrieben, zu konfigurieren. Schritt 170 ist optional.

Gemäß der zweiten oben beschriebenen Ausführungsform umfasst der Schritt 100 des Erfassens der Position des Feldgeräts 1 weitere unten angegebene Einzelschritte, wobei das übrige Verfahren identisch durchgeführt werden kann.

In Schritt 101 wird das Feldgerät 1 mit Empfänger 4 für Positionsdaten verbunden. Die Verbindung erfolgt über die entsprechende Schnittstelle an dem Feldgerät 1.

In Schritt 102 empfängt der Empfänger 4 Satelliten-Positionsdaten.

In Schritt 103 werden die von dem Empfänger 4 empfangenen Satelliten-Positionsdaten an das Feldgerät 1 übertragen.

**Bezugszeichenliste**

| | |
|---|---|
| Feldgerät | 1 |
| Messeinheit | 2 |
| Positionserfassungseinheit | 3 |
| Empfänger | 4 |
| Verarbeitungseinheit | 5 |
| Kommunikationseinheit | 6 |
| Server | 10 |
| Serverkommunikationseinheit | 11 |
| Zuordnungseinheit | 12 |

## Patentansprüche

1. Verfahren zum Betrieb eines Feldgeräts (1) zur Durchführung von Mess- und/oder Automatisierungsaufgaben in einem weitflächigen Automatisierungsnetz, umfassend folgende Schritte:
Erfassen der Position des Feldgeräts (1) in dem Feldgerät (1),
Erzeugen eines das Feldgerät (1) identifizierenden Datensatzes mit der Position und einer eindeutigen Kennung des Feldgeräts (1),
Übertragen des Datensatzes von dem Feldgerät (1) an einen Server (10) des Automatisierungsnetzes,
**gekennzeichnet durch** die Schritte
Zuordnen eines Bezeichners zu dem durch den Datensatz identifizierten Feldgerät (1),
Übertragen des Bezeichners von dem Server (10) an das Feldgerät (1),
Kommunizieren in dem Automatisierungsnetz unter Verwendung des Bezeichners,
Vergleichen der Position des durch den Datensatz identifizierten Feldgeräts (1) mit Positionen von in dem Automatisierungsnetz bekannten Feldgeräten (1), und
Übertragen des Bezeichners eines bekannten Feldgeräts (1) mit der gleichen Position auf das durch den Datensatz identifizierte Feldgerät (1).

2. Verfahren nach Anspruch 1, **dadurch gekennzeichnet, dass**
der Schritt des Erfassens der Position des Feldgeräts (1) das Auswerten von Positionsdaten, insbesondere von Satellitenpositionsdaten umfasst.

3. Verfahren nach einem der Ansprüche 1 oder 2, **dadurch gekennzeichnet, dass**
der Schritt des Erfassens der Position des Feldgeräts (1) umfasst:
Verbinden des Feldgeräts (1) mit einem Empfänger (4) für Positionsdaten, insbesondere für Satellitenpositionsdaten,
Empfangen von Positionsdaten in dem Empfänger (4), und
Übertragen der empfangenen Positionsdaten von dem Empfänger (4) an das Feldgerät (1).

4. Verfahren nach einem der vorhergehenden Ansprüche, umfassend folgenden zusätzlichen Schritt:
Übertragen von Konfigurationsdaten von dem Server (10) an das Feldgerät (1) in Abhängigkeit von der Position des Feldgeräts (1).

5. Verfahren nach einem der vorhergehenden Ansprüche, **dadurch gekennzeichnet, dass**
der Schritt des Zuordnens eines Bezeichners zu dem durch den Datensatz identifizierten Feldgerät (1) das Erzeugen eines logischen Namens unter Berücksichtigung der Position des Feldgeräts (1) umfasst.

6. Server (10) für ein weitflächiges Automatisierungsnetz zum Betrieb wenigstens eines Feldgeräts (1) zur Durchführung von Mess- und/oder Automatisierungsaufgaben, umfassend
eine Serverkommunikationseinheit (11),
**dadurch gekennzeichnet, dass**
der Server (10) eine Zuordnungseinheit (12) umfasst, die ausgeführt ist, einem durch einen Datensatz mit der Position und einer eindeutigen Kennung identifizierten Feldgerät (1) einen Bezeichner zuzuordnen,
die Serverkommunikationseinheit (11) ausgeführt ist, den Datensatz von dem Feldgerät (1) zu empfangen und den Bezeichner an das Feldgerät (1) zu übertragen,
der Server (10) ausgeführt ist, mit dem Feldgerät (1) unter Verwendung des Bezeichners zu kommunizieren, und
der Server (10) ausgeführt ist, die Position des durch den Datensatz identifizierten Feldgeräts (1) mit Positionen von in dem Automatisierungsnetz bekannten Feldgeräten (1) zu vergleichen, und den Bezeichner eines bekannten Feldgeräts (1) mit der gleichen Position auf das durch den Datensatz identifizierte Feldgerät (1) zu übertragen.

7. Server (10) nach Anspruch 6, **dadurch gekennzeichnet, dass**
der Server (10) ausgeführt ist, Konfigurationsdaten an das Feldgerät (1) unter Berücksichtigung der Position zu übertragen.

8. System mit einem Feldgerät (1) zur Durchführung von Mess- und/oder Automatisierungsaufgaben in einem weitflächigen Automatisierungsnetz und einem Server nach einem der vorhergehenden Ansprüche 6 oder 7, das Feldgerät (1) umfassend
eine Positionserfassungseinheit (3), die ausgeführt ist, die Position des Feldgeräts (1) zu erfassen,
eine Verarbeitungseinheit (5) zum Erzeugen eines das Feldgerät (1) identifizierenden Datensatzes mit der erfassten Position und einer eindeutigen Kennung des Feldgeräts (1), und
eine Kommunikationseinheit (6), die ausgeführt ist, den Datensatz unter Berücksichtigung der Position des Feldgeräts (1) an den Server (10) des Automatisierungsnetzes zu übertragen und einen Bezeichner von dem Server (10) zu empfangen, wobei
das Feldgerät (1) ausgeführt ist, mit dem Automatisierungsnetz unter Verwendung des Bezeichners zu kommunizieren.

9. System nach Anspruch 8, **dadurch gekennzeichnet, dass**
das Feldgerät (1) einem Empfänger (4) für Positionsdaten, insbesondere für Satellitenpositionsdaten umfasst.

10. System nach Anspruch 8, **dadurch gekennzeichnet, dass**
das Feldgerät (1) eine Schnittstelle für die Verbindung mit einem Empfänger (4) für Positionsdaten, insbesondere für Satellitenpositionsdaten umfasst, wobei die Positionserfassungseinheit (3) ausgeführt ist, Positionsdaten von dem Empfänger (4) für Positionsdaten über die Schnittstelle zu empfangen.

11. System nach einem der Ansprüche 8 bis 10, **dadurch gekennzeichnet, dass**
das Feldgerät (1) ausgeführt ist, Konfigurationsdaten für von dem Server (10) zu empfangen.

12. System nach einem der Ansprüche 8 bis 11, **dadurch gekennzeichnet, dass**
das Feldgerät (1) ausgeführt ist, unter Berücksichtigung seiner Position eine positionsbezogene Konfiguration der Kommunikationseinheit (6) zur Kommunikation mit dem Server (10), insbesondere zum Übertragen des Datensatzes und Empfangen des Bezeichners, durchzuführen.

## Claims

1. A method for operating a field device (1) for carrying out measurement and/or automation tasks in a wide-area automation network, comprising the following steps:
detecting the position of the field device (1) in the field device (1);
generating a data set identifying the field device (1) and containing the position and a unique identification of the field device (1);
transmitting the data set from the field device (1) to a server (10) of the automation network;
**characterized by** the steps of
assigning an identifier to the field device (1) identified by the data set;
transmitting the identifier from the server (10) to the field device (1);
communicating in the automation network using the identifier;
comparing the position of the field device (1) identified by the data set with positions of known field devices (1) in the automation network, and
transmitting the identifier of a known field device (1) having the same position to the field device (1) identified by the data set.

2. The method according to claim 1, **characterized in that**
the step of detecting the position of the field device (1) comprises the evaluation of position data, in particular of satellite position data.

3. The method according to either claim 1 or 2, **characterized in that** the step of detecting the position of the field device (1) comprises:
connecting the field device (1) to a receiver (4) for position data, in particular for satellite position data;
receiving position data in the receiver (4), and
transmitting the received position data from the receiver (4) to the field device (1).

4. The method according to any one of the preceding claims, comprising the following additional step:
transmitting configuration data from the server (10) to the field device (1) as a function of the position of the field device (1).

5. The method according to any one of the preceding claims, **characterized in that**
the step of assigning an identifier to the field device (1) identified by the data set comprises the generation of a logical name, taking the position of the field device (1) into consideration.

6. A server (10) for a wide-area automation network for operating at least one field device (1) for carrying out measurement and/or automation tasks, comprising:
a server communication unit (11),
**characterized in that**
the server (10) comprises an assignment unit (12), which is designed to assign an identifier to a field device (1) identified by a data set containing the position and a unique identification;
the server communication unit (11) is designed to receive the data set from the field device (1) and to transmit the identifier to the field device (1);
the server (10) is designed to communicate with the field device (1) using the identifier; and
the server (10) is designed to compare the position of the field device (1) identified by the data set with positions of known field devices (1) in the automation network, and to transmit the identifier of a known field device (1) having the same position to the field device (1) identified by the data set.

7. The server (10) according to claim 6, **characterized in that** the server (10) is designed to transmit configuration data to the field device (1), taking the position into consideration.

8. A system comprising a field device (1) for carrying out measurement and/or automation tasks in a wide-area automation network and a server according to any one of the preceding claims 6 or 7, the field device (1) comprising:
a position detection unit (3), which is designed to detect the position of the field device (1);
a processing unit (5) for generating a data set identifying the field device (1) and containing the detected position and a unique identification of the field device (1), and
a communication unit (6), which is designed to transmit the data set to a server (10) of the automation network and to receive an identifier from the server (10), taking the position of the field device (1) into consideration, wherein
the field device (1) is designed to communicate with the automation network using the identifier.

9. The system according to claim 8, **characterized in that**
the field device (1) comprises a receiver (4) for position data, in particular for satellite position data.

10. The system according to claim 8, **characterized in that**
the field device (1) comprises an interface for the connection to a receiver (4) for position data, in particular for satellite position data, wherein the position detection unit (3) is designed to receive position data from the receiver (4) for position data via the interface.

11. The system according to any one of claims 8 to 10,
**characterized in that**
the field device (1) is designed to receive configuration data from the server (10).

12. The system according to any one of claims 8 to 11,
**characterized in that**
the field device (1) is designed, taking the position thereof into consideration, to carry out a position-based configuration of the communication unit (6) for communication with the server (10), in particular for transmission of the data set and receipt of the identifier.

## Revendications

1. Procédé pour faire fonctionner un appareil de terrain (1) pour l'exécution de services de mesure et/ou d'automatisation dans un réseau d'automatisation de grande surface, comprenant les étapes suivantes :
saisie de la position de l'appareil de terrain (1) dans l'appareil de terrain (1),
génération d'un ensemble de données identifiant l'appareil de terrain (1) avec la position et un identifiant précis de l'appareil de terrain (1),
transmission de l'ensemble de données de l'appareil de terrain (1) à un serveur (10) du réseau d'automatisation,
**caractérisé par** les étapes
d'affectation d'un identifieur à l'appareil de terrain (1) identifié par l'ensemble de données,
transmission de l'identifieur du serveur (10) à l'appareil de terrain (1),
communication dans le réseau d'automatisation moyennant l'emploi de l'identifieur,
comparaison de la position de l'appareil de terrain (1) identifié par l'ensemble de données avec des positions d'appareils de terrain (1) connus dans le réseau d'automatisation, et
transmission de l'identifieur d'un appareil de terrain (1) connu avec la même position vers l'appareil de terrain (1) identifié par l'ensemble de données.

2. Procédé selon la revendication 1, **caractérisé en ce que**
l'étape de saisie de la position de l'appareil de terrain (1) comprend l'évaluation de données de position, en particulier, de données de positions satellites.

3. Procédé selon l'une des revendications 1 ou 2, **caractérisé en ce que**
l'étape de saisie de la position de l'appareil de terrain (1) comprend :
la connexion de l'appareil de terrain (1) avec un récepteur (4) pour des données de position, en particulier, pour des données de position satellites,
la réception de données de position dans le récepteur (4), et
la transmission des données de position réceptionnées du récepteur (4) à l'appareil de terrain (1).

4. Procédé selon l'une des revendications précédentes, comprenant l'étape supplémentaire suivante :
de transmission de données de configuration du serveur (10) à l'appareil de terrain (1) en fonction de la position de l'appareil de terrain (1).

5. Procédé selon l'une des revendications précédentes, **caractérisé en ce que**
l'étape d'affectation d'un identifieur à l'appareil de terrain (1) identifié par l'ensemble de données comprend la génération d'un nom logique en tenant compte de la position de l'appareil de terrain (1) .

6. Serveur (10) destiné à un réseau d'automatisation de grande surface pour le fonctionnement d'au moins un appareil de terrain (1) pour l'exécution de services de mesure et/ou d'automatisation, comprenant
une unité de communication de serveur (11),
**caractérisé en ce que**
le serveur (10) comprend une unité d'affectation (12) qui est conçue pour affecter un identifieur à un appareil de terrain (1) identifié par un ensemble de données avec la position et un identifiant précis,
l'unité de communication de serveur (11) est conçue pour réceptionner l'ensemble de données de l'appareil de terrain (1) et pour transmettre l'identifieur à l'appareil de terrain (1),
le serveur (10) est conçu pour communiquer avec l'appareil de terrain (1) moyennant l'emploi de l'identifieur, et
le serveur (10) est conçu pour comparer la position de l'appareil de terrain (1) identifié par l'ensemble de données avec des positions d'appareils de terrain (1) connues dans le réseau d'automatisation, et pour transmettre l'identifieur d'un appareil de terrain (1) connu avec la même position vers l'appareil de terrain (1) identifié par l'ensemble de données.

7. Serveur (10) selon la revendication 6, **caractérisé en ce que**
le serveur (10) est conçu pour transmettre des données de configuration à l'appareil de terrain (1) en tenant compte de la position.

8. Système doté d'un appareil de terrain (1) pour l'exécution de services de mesure et/ou d'automatisation dans un réseau d'automatisation de grande surface et d'un serveur selon l'une des revendications précédentes 6 ou 7, l'appareil de terrain (1) comprenant
une unité d'évaluation de position (3) qui est conçue pour saisir la position de l'appareil de terrain (1),
une unité de traitement (5) pour la génération d'un ensemble de données identifiant l'appareil de terrain (1) avec la position saisie et un identifiant précis de l'appareil de terrain (1), et
une unité de communication (6) qui est conçue pour transmettre l'ensemble de données au serveur (10) du réseau d'automatisation en tenant compte de la position de l'appareil de terrain (1) et recevoir un identifieur du serveur (10), où
l'appareil de terrain (1) est conçu pour communiquer l'identifieur moyennant l'emploi de l'identifieur.

9. Système selon la revendication 8, **caractérisé en ce que**
l'appareil de terrain (1) comprend un récepteur (4) pour des données de position, notamment pour des données de position satellites.

10. Système selon la revendication 8, **caractérisé en ce que**
l'appareil de terrain (1) comprend une interface pour la connexion avec un récepteur (4) pour des données de position, notamment des données de position satellites, où l'unité de détection de positions (3) est conçue pour recevoir des données de position du récepteur (4) pour des données de position par le biais de l'interface.

11. Système selon l'une des revendications 8 à 10, **caractérisé en ce que**
l'appareil de terrain (1) est conçu pour réceptionner des données de configuration du serveur (10).

12. Système selon l'une des revendications 8 à 11, **caractérisé en ce que**
l'appareil de terrain (1) est conçu pour, en tenant compte de sa position, exécuter notamment une configuration relative à la position de l'unité de communication (6) pour la communication avec le serveur (10), en particulier, pour transmettre l'ensemble de données et pour la réception de l'identifieur.
